# EUROPEAN PATENT SPECIFICATION

(11) **EP 0 653 723 B1**
(45) Date of publication and mention of the grant of the patent: **01.10.2003**
(21) Application number: 94117879.0
(22) Date of filing: 11.11.1994
(51) Int. Cl.: G06K 7/10

(54) **Scan module with shock protection**
Abtastelement mit Stosschutz
Module de balayage protégé contre des chocs

(30) Priority: 17.11.1993 US 153053; 20.10.1994 US 326328
(43) Date of publication of application: 17.05.1995
(60) Divisional application: 03003186.8
(73) Proprietor: SYMBOL TECHNOLOGIES, INC., Bohemia New York 11716 (US)
(72) Inventor: Bridgelall, Raj, Mt. Sinai, NY 11766 (US); Katz, Joseph, Stony Brook, NY 11790 (US); Goren, David P., Ronkonkoma, NY 11779 (US); Dvorkis, Paul, Stony Brook, NY 11790 (US); Li, Yajun, Oakdale, NY 11769 (US)
(74) Representative: Wagner, Karl H., Dipl.-Ing.

(56) References cited:
- EP-A- 0 456 095
- EP-A- 0 548 951
- EP-A- 0 574 024
- US-A- 5 235 167

## Description

This invention relates generally to scanning systems which "read" indicia, such as barcode symbols.

It further relates to a scan module for use in an optical scanner, for example, a bar code scanner.

Various optical readers and scanning systems have been developed for reading barcode symbols appearing on a label or the surface of an article. The barcode symbol itself is a coded pattern of indicia comprised of a series of bars of various widths spaced apart from one another to bound spaces of various widths, the bars and spaces having different light-reflecting characteristics. The readers and scanning systems electro-optically transform the graphic indicia into electrical signals, which are decoded into alpha-numerical characters intended to be descriptive of the article or some characteristic of it. Such characters typically are represented in digital form, and utilized as an input to a data processing system for applications in point-of-sale processing, inventory control and the like. Scanning systems of this general type have been disclosed, for example, in U.S. Patent Nos. 4,251,798; 4,360,798; 4,369,361; 4,387,297; 4,409,470 and 4,460,120, all assigned to the assignee of the present invention.

One embodiment of such a scanning system, as disclosed in some of the above patents, resides in, inter alia, a hand-held, portable laser scanning head supported by a user. The scanning head is configured to enable the user to aim the head at a target to emit a light beam toward a symbol to be read. The light source is a laser scanner typically in the form of a gas or semiconductor laser element. Use of semiconductor devices as the light source in scanning systems is particularly desirable because of the small size, low cost and low power requirements of semiconductor lasers. The laser beam is optically modified, typically by a lens, to form a beam spot of a certain size at the target distance.
Preferably, the beam spot size at the target distance is approximately the same as the minimum width between regions of different light reflectivity, i.e., the bars and spaces of the symbol.

A one-dimensional single-line scan, as ordinarily provided by hand-held readers, functions by repetitively scanning the light beam in a line or series of lines across the symbol using a scanning component such as a mirror -disposed in the light path. The scanning component may either sweep the beam spot across the symbol and trace a scan line across and past the symbol, or scan the field in view of the scanner, or do both.

Scanning systems also include a sensor or photodetector, usually of semiconductor type, which functions to detect light reflected from the symbol. The photo-detector is therefore positioned in the scanner or in an optical path in which it has a field of view which extends across and slightly past the symbol. A portion of the reflected light which is reflected off the symbol is detected and converted into an electrical signal, and electronic circuitry or software decodes the electrical signal into a digital representation of the data represented by the symbol that has been scanned. For example, the analog electrical signal from the photodetector may typically be converted into a pulse width modulated digital signal, with the widths corresponding to the physical widths of the bars and spaces. Such a signal is then decoded according to the specific symbology into a binary representation of the data encoded in the symbol, and to the alphanumeric characters so represented.

In recent years, it has become more common for bar code scanners to have within them a distinct scanner module containing all the necessary mechanical and optical elements needed to create the scanning of the laser beam and to deal with the incoming reflected beam from the bar code that is being scanned. Using a separate scanner module, within the housing of the bar code scanner, facilitates a modular approach to design and manufacture, thereby keeping costs down, improving reliability, and facilitating the transfer of scanning technology to a variety of scanner housings. A typical prior art scanner module is disclosed in US Patent 4 930 848.

There are a large number of known ways of mounting a mirror within the scanning component to cause the necessary scanning motion of the laser beam. Some provide for oscillation in only a single direction, so that the scanning laser beam traces out a single path across the bar code being scanned. Others provide two dimensional scanning patterns, such as for example raster patterns or patterns of greater complexity. Examples of scanning components allowing two dimensional scanning are shown in US Patent 5 280 165, and in EP-A-0 540 781.

EP-A-0 456 095 discloses a scanner for reading indicia having parts of different light reflectivity by directing light toward the indicia, and by collecting reflected light returning from the indicia, an arrangement for scanning the indicia, comprising a scanner component; holder means for mounting the component for angular oscillating movement in first and second scan directions between first and second pairs of scan end positions; and a read-start means for simultaneously moving the component in the first and second scan directions to simultaneously angularly oscillate the component between the first and second pairs of scan end positions for directing light along the first and second scan directions to thereby effect a two-dimensional scan pattern over the indicia, wherein the holder means includes first and second vibratory means positioned to vibrate in two orthogonal planes and to cooperate for angular oscillating movement of the component in first and second orthogonal scan directions, wherein the actuator includes an electromagnetic coil having a passage, and a magnet mounted on one of the vibratory means and movable into and out of the passage during actuation of the coil, wherein the single vibratory means comprises a generally planar spring means having a longitudinal axis and a pivot end secured to a base and wherein the component is mounted to the planar spring means such that the center of gravity of the component is offset from the longitudinal axis, wherein the first vibratory means includes a U-shaped spring means having a pair of arms on one of which is mounted the component and wherein the second vibratory means includes a generally planar spring means having one end secured to a base and a free end secured to the other arm of the U-shaped spring means, the arms of the U-shaped spring means vibrating in one plane and the planar spring torsionally vibrating in the other plane of the two orthogonal planes.

EP-A-0 548 951 discloses a scanning arrangement located within a scanning device which is operative for repetitively scanning indicia having parts of different light reflectivity, for example, bar code symbols, and more particularly, pertains to a novel scanning motor of the arrangement for enabling a scan element which is supported by a holder structure mounted on a Mylar® motor to implement angular oscillatory movements in a linear scan direction between a pair of scan end positions. Hereby, pursuant to the structure of the scanning device, the scanning arrangement is preferably mounted on a single printed circuit board located within a lightweight scanning device of a hand-held housing of gun-shaped configuration which may be readily held and manipulated by a user of the scanning device. The structure of the scanning motor and of the scanning arrangement which are mounted on a printed circuit board is considerably simplified through the construction of the various components being essentially of molded plastic material, and through the utilization of a mylar leaf spring which limits the end scan positions of a scan element or mirror which is oscillated by a read-start device including a permanent magnet mounted on an arm of the holder for the scan mirror.

As optical scanning systems have become more complex, and as the demand for smaller size and lower power consumption has increased, shock protection for the scanner modules has become more difficult. These highly efficient scan engines, with both resonant and non-resonant scanning elements are difficult to protect because the scanning element must be free to move for scanning but must be protected in the event of a shock (for example if the user drops the bar code scanner within which the scanner module is incorporated). Also, as sizes are reduced manufacturing tolerances begin to have more significant impacts on costs. Furthermore, it becomes more difficult to achieve accurate optical alignment during assembly, and to maintain that optical alignment during the life of the product.

It is a general object of the invention at least to alleviate the problems of the prior art.

It is an additional object to provide a scanner module in which the scanning element is protected against shock.

It is a further object to provide a scanner module of increased compactness.

It is a further object to provide a robust, compact scanner module having reduced manufacturing/assembly costs.

Still other objects and advantages of the present invention will become readily apparent to those skilled in this art from the following detailed description, wherein only the preferred embodiment of the invention is shown and described, simply by way of illustration of the best mode contemplated of carrying out the invention. As will be realized, the invention is capable of other and different embodiments. Accordingly, the drawing and description are to be regarded as illustrative in nature, and not as restrictive.

According to an aspect of the present invention there is provided a scan module for use in a scanner for reading indicia having parts of differing light reflectivity, as set forth in claim 1.

According to a further aspect of the invention there is providing a method of assembling a scan module for use in a scanner for reading indicia having parts of differing reflectivity, as set forth in claim 19.

Preferred embodiments of the present invention may be gathered from the dependent claims.

Preferably, the scanning component comprises a main bracket (for example of a beryllium copper alloy) which includes a pair of hanging brackets by which the main bracket is secured to the frame. Each hanging bracket has attached to it a thin strip of a polyester film, the strip being secured at one end to the hanging bracket and at the other end to the frame. The main bracket therefore hangs from the frame on the strips. The strips can flex, allowing the main bracket to oscillate.

The main bracket desirably carries the optical element, such as a mirror, for directing light shone on to it in a scanning pattern across the indicia to be read. The mirror may be secured to the main bracket by a further flexure, allowing the mirror to oscillate independently of the main bracket. If the flexure supporting the mirror and the strips are arranged to flex in mutually perpendicular directions, two dimensional scanning patterns (such as raster patterns) can be produced.

The strips may be protected from mechanical shock by first and second anti-shock pins which pass through apertures in the hanging brackets. The diameter of the central portions of the pins is slightly smaller than the diameter of the apertures, thereby allowing the main bracket to oscillate in use. However, if a shock is applied to the scan module, the pins prevent excessive movement of the main bracket, and hence prevent over-stressing of the strips.

Each anti-shock pin may include an enlarged head portion, which is of substantially the same size and shape in cross section as the aperture in the respective hanging bracket. This allows the main bracket to be accurately positioned with respect to the frame during assembly of the scan module, when the pin is in a partially-inserted position. Once the position has been accurately determined, the main bracket may be secured to the frame, and the pins fully inserted.

The invention may be carried into practice in a number of ways, and one specific embodiment will now be described, by way of example, with reference to the accompanying drawings. The novel features which are considered as characteristic of the invention are set forth in particular in the appended claims. The preferred features of the invention, however, both as to its construction and its method of operation, together with additional objects and advantages thereof, will best be understood from the following description, when read in conjunction with the drawings.
Figure 1 is a symbolic drawing of a scanning assembly having a low-mass reflector oscillated by a permanent magnet-electromagnet mechanism.
Figure 2 is a diagram showing that the angle of oscillation of the low-mass reflector is considerably greater than that of the permanent magnet to which it is mechanically coupled.
Figure 3 is an exploded perspective view of a scanner module embodying the present invention;
Figure 4 is a partially assembled view of the scanner module of Figure 3;
Figure 5 is a fully assembled view of the scanner module of Figure 3; and
Figure 6 is a view from below of the scanner module of Figure 3.

As used in this specification, the terms "symbol" and "barcode" are intended to be broadly construed and to cover not only patterns composed of alternating bars and spaces of various widths, but also other one or two dimensional graphic patterns, as well as alphanumeric characters.

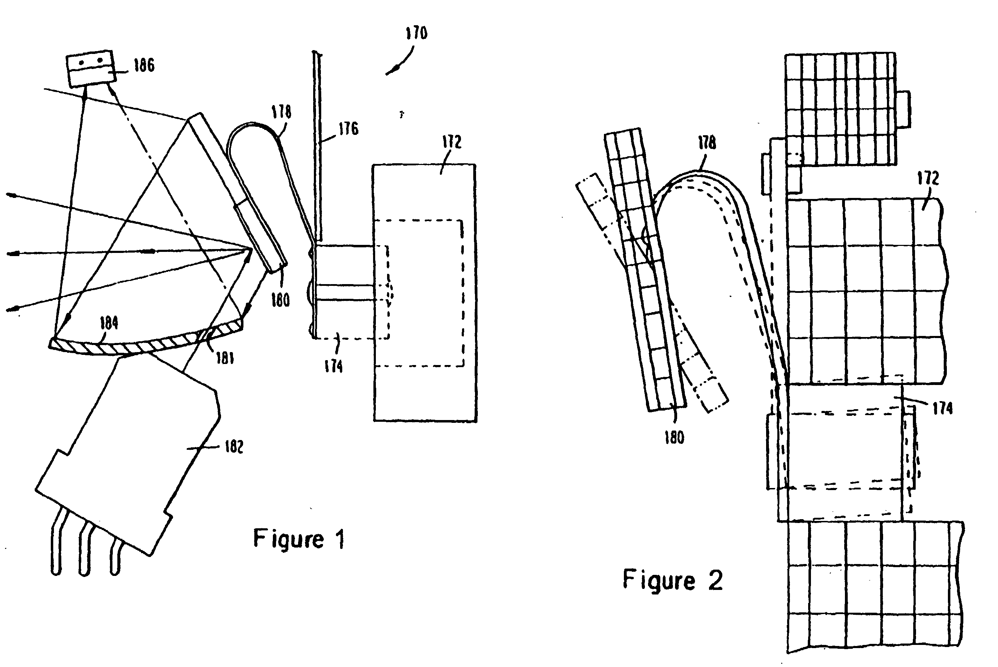

Figure 1 shows a scanner which comprises an electromagnetic coil 172 having a central opening into which partially extends and electromagnetic coil 174. The coil 172 is rigidly secured to a support member (not shown), and the magnet 174 is resiliently coupled to the same support by means of an arm 176.

A U-shaped spring 178 is attached to the magnet 174 at one end, and the opposite end of the spring supports an optical element, preferably a reflector 180. Electrical leads (not shown) carry an energizing current or drive signal to the coil of electromagnet 174. The reflector 180 will oscillate in response to such electromagnet coil signal so as to scan in one or two dimensions, selectively. The spring 178 may be made of any suitable flexible materials, such as a leaf spring, a flexible metal coil or a flat bar having sufficient flexibility properties, and may be of a material such as a beryllium-copper alloy.

The reflector 180 is positioned between a laser beam source and lens assembly 182 and a target (not shown in Figure 1). Between the reflector 180 and source 182 is a collector 184 having an opening through which a light beam emitted by the laser source 182 may pass to the reflector 180. The collector is oriented so as to direct incoming light, reflected by reflector 180 and then collector 184, to a photodetector 186.

An important aspect of Figure 1 is that the mass of reflector 180 is considerably less than the mass of permanent magnet 174. The mass of the mirror is selected to be less than about one-fifth the mass of the magnet, and the angle of vibration of the mirror as shown in Figure 2, a diagram derived by computer simulation, is about seven times that of the permanent magnet.

The reflector 180 is capable of 2-D scanning. The U-shaped spring 178, which may be formed of a plastic material, such as Mylar or Kapton, the arms of the U-shaped spring 178 and the planar spring 176 may be arranged to vibrate in planes . which are orthogonal to each other. Oscillatory forces applied to permanent magnet 174 by the electromagnetic 172 can initiate desired vibrations in both of the springs 178 and 176 by carefully selecting drive signals applied to various terminals of the coil, as discussed in the copending application. Because of the different frequency vibration characteristics of the two springs 178 and 176, each spring will oscillate only at its natural vibration frequency. Hence, when the electromagnetic 172 is driven by a super position signal of high and low frequency components, the U-shaped spring will vibrate at a frequency in the high range of frequencies, and the planar spring 176 will vibrate at a frequency in the low range of frequencies.

An additional important aspect of Figure 1 is that the laser beam emitted by source 182 impinges the reflector 180 at an angle that is orthogonal to the axis of rotation of the reflector. Hence, the system avoids droop in the 2-D scan pattern that tends to arise when the angle of incidence of the laser beam is non-orthogonal to the reflective surface.

Another important aspect of Figure 1 is in the folded or "retro" configuration shown, with the laser beam source 182 off axis from that of the beam directed from the reflector 180 to the target. The detector field of view follows the laser path to the target by way of collector 184. The folded configuration shown is made possible by opening 181 in the collector. The retro configuration enables the scanning mechanism to be considerably more compact than heretofore possible.

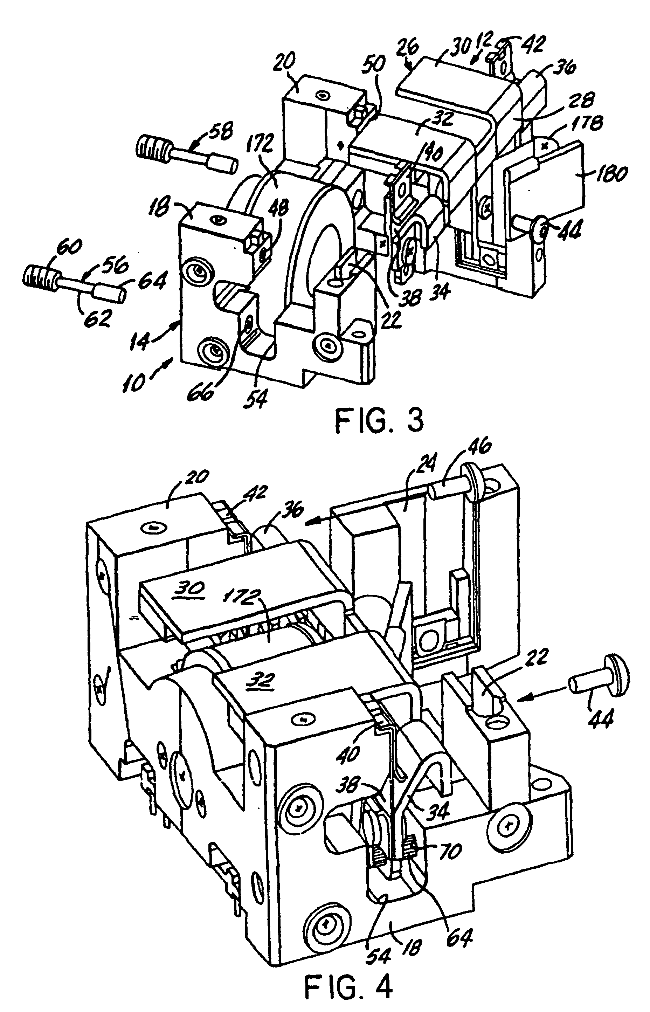

Reference should next be made to Figures 3 to 6, which illustrate the preferred scanner module within which the scanning arrangement of Figures 1 and 2 may be incorporated. For ease of reference, parts of the module already described with reference to Figures 1 and 2 will be given the same reference numerals.

As may best be seen in the exploded view of Figure 3, the preferred scanner module consists of two separate sections: a chassis element 10 and a scan element 12. In Figure 3, these two sections are shown in exploded form, prior to their securement together during the assembly process.

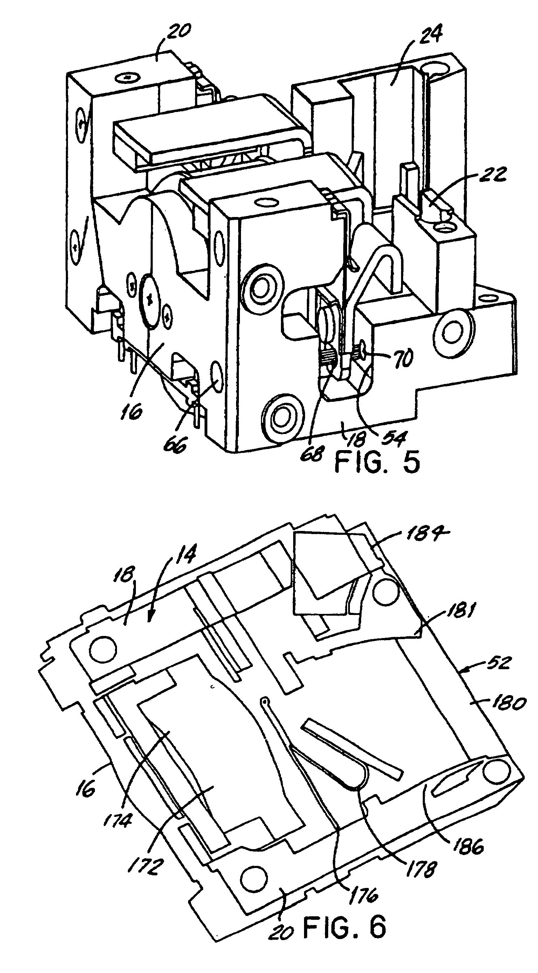

As is best seen in Figures 5 and 6, the chassis element 10 comprises a chassis 14 which carries the coil 172. The coil 172 is secured to a rear wall 16 of the chassis. At respective ends of the rear wall there are first and second forwardly-extending side supports 18, 20. The forward end of the side support 18 is provided with a vertical slot 22 (Figure 5) into which is placed (Figure 6) the collecting mirror 184 previously referred to. The forward part of the other side support 20 is provided with a larger vertical slot or cavity 24 (Figure 5) into which the photodiode assembly 186 (Figure 6) fits.

The features of the scan element 12 (which is during assembly secured to the chassis element 10) is best seen from a comparison of Figures 3, 4 and 6. The scan element comprises a beryllium-copper bracket generally shown at 26 having a vertical mounting portion 28 in a plane perpendicular to the axis of the coil 172. The upper part of the mounting portion is formed with two rearwardly-pointing prongs 30, 32 (not visible in Figure 6) which act a counterweights for the mirror 180. Secured to the mounting portion 28 is the spring 178, previously mentioned with reference to Figure 1, which carries the mirror 180. On either side of the prongs 30, 32, the upper edge of the mounting portion 28 is bent backwardly to form first and second hanging brackets (34, 36, best seen in Figures 3 and 4. Screwed to these hanging brackets are respective first and second sheets of Mylar film 38, only one of which is visible in Figures 3 to 5. At the top of the Mylar sheets are secured respective hangers 40, 42.

The scanner module is assembled by bringing the scan element 12 up to the chassis element 10 and using screws 44, 46 to attach the hangers 40, 42 to respective bosses 48, 50 on the chassis side supports 18, 20. The relative positioning of the chassis element and the scan element, just prior to their securement together by the screws 44, 46 is shown most clearly in Figure 4.

It will be appreciated that once the scanner module has . been assembled, as described, the entire weight of the scan element, including the mirror 180, is supported by the hangers 40, 42 and the sheets of Mylar film 38. The entire scan element is accordingly free to rock back and forth about a horizontal axis perpendicular to the axis of the coil 172 as the Mylar film flexes.

The operation of the device will now be described, with reference to Figure 6. A laser beam, emanating from the laser beam source and lens assembly 182, passes through the hole 181 in the collector 184, and impinges upon the mirror 180 from which it is reflected via a window 52 to a bar code symbol to be read (not shown). Energisation of the coil 172 causes oscillation of the mirror 180 in two directions: a first direction due to flexing of the spring 178 and a second direction due to flexing of the Mylar film 38. By appropriate control of the coil, a variety of scanning patterns can be produced, for example a raster pattern or other types of two-dimensional pattern.

Light reflected back from the bar code symbol passes back through the window 52, impinges on the mirror 180, and is reflected to the collector 184. The collector concentrates the light and reflects it back to the photo detector 186. Decoding circuitry and/or a microprocessor (not shown) then decode the signals received by the photo detector 186, to determine the data represented by the bar code.

It might be thought that because the entire weight of the scan element 12 is taken by the Mylar film 38, the system is likely to be very vulnerable to shocks, for example if the user accidentally knocks or even drops the bar code scanner within which the module is contained. However, provision has been made for that contingency by way of an anti-shock feature which will now be described.

First, as may be seen in Figures 4 and 5, the lower end of the hanging bracket 34 is located within a channel or cut out portion 54 formed in the side support 18 of the chassis. As the Mylar film 38 flexes, the hanging bracket 34 moves back and forth within the channel 54. The Mylar film 34 is prevented from over-flexing by the walls of the channel 54 which act as stops. A similar arrangement (not visible in the drawings) is provided on the other side.

A second level of protection is provided by alignment pins 56, 58, best seen in Figure 3. Each pin comprises a threaded rear head portion 60, a reduced diameter smooth waist portion 62, and a smooth forward head portion 64.

In its operational position, shown in Figure 5, the waist portion 62 of the pin passes through a hole 68 in the hanging bracket 34, with the forward head portion 64 being received within a correspondingly-sized blind bore 70 within one side of the channel 54. The rear head portion 60 of the pin is screwed into and held in place by a threaded bore 66 which opens at its forward end into the channel 54 and at its rearward end into the rear surface of the rear wall 16. There is a similar arrangement on the other side (not shown) for the second alignment pin 58.

The diameter of the waist portion 62 of the pin is some 0.5 mm (0.02 inches) smaller than the diameter of the hole 68 in the hanging bracket. This provides sufficient tolerance for the Mylar to flex slightly during normal operation of the device. However, if the module is dropped the presence of the pin prevents over-stressing and perhaps breaking of the Mylar.

The alignment pins have a further function of assisting accurate positioning of the scan element 12 with respect to the chassis during assembly. During assembly, the scan element is brought up into approximately the correct position, and the alignment pins are then inserted as shown in Figure 4. At this point, the forward head portion 64 is a tight tolerance sliding fit both within the hole 68 in the hanging bracket and in the blind bore 70. This aligns the scan element to the pins and hence to the chassis. The scan element is then secured to the chassis, as previously described, using the screws 44, 46. The hangers 40, 42 provide a certain amount of adjustability or tolerance in positioning, thereby ensuring that the scan element can be attached to the chassis at the position defined by the alignment pins. The pins are then fully screwed into the threaded bores 66 until the end of the pin is flush with the rear face 16 of the chassis. At this point, as is shown in Figure 5, the forward head portion of the pin has been received within the bore 70, and the waist portion has moved up to its final position within the hole 68 of the hanging bracket.

## Claims

1. A scan module for use in a scanner for reading indicia having parts of differing light reflectivity, the scan module comprising:
a) a framed (10);
b) a scanning component (12) mounted to the frame for oscillatory motion, the scanning component including an optical element (180) for directing light in a scanning pattern across an indicia to be read, the scanning component having an aperture (68) therein; and
c) an anti-shock member (56, 58), **characterized in that** said anti-shock member passes through the aperture in the scanning component, the anti-shock member being smaller in cross section than the size of the aperture, thereby providing clearance for the scanning component to oscillate in use, but preventing excessive movement of the scanning component with respect to the frame in the event that the module is subjected to a mechanical shock.

2. A scan module as defined in claim 1 wherein the anti-shock member (56, 58) is a pin having a first head portion (60), a second head portion (64), and a waist portion (62) having a smaller cross section than the first and second head portions, the waist portion being located within the aperture (68) during normal operation of the scan module.

3. A scan module as defined in claim 2 wherein the first head portion (60) carries an external screw thread which is arranged to be screwed in to a bore (66) in the frame.

4. A scan module as defined in claim 2 wherein the second head portion (64) is arranged to be received within a correspondingly-sized bore (70) within the frame.

5. A scan module as defined in claim 2 wherein the cross sectional size and shape of the second head portion (64) corresponds with the size and shape of the aperture (68).

6. A scan module as defined in claim 5 wherein the second head portion (64) is of such a length that the pin may be positioned with the second head portion contained within the aperture and extending from the aperture in to a correspondingly-sized bore within the frame, thereby locating the scanning component with respect to the frame.

7. A scan module as defined in claim 3 wherein the first head portion (60) is substantially flush with the frame when the pin is in a position for normal operation of the scan module.

8. A scan module as defined in claim 2 wherein the pin (56, 58) extends across a cut out portion (54) of the frame, the aperture (68) being in a portion of the scanning component which extends into the said cut out portion.

9. A scan module as defined in claim 8 wherein the said portion of the scanning component comprises a hanging bracket (34, 36).

10. A scan module as defined in claim 1 wherein the aperture (68) is in a portion of the scanning component comprising a hanging bracket (34, 36).

11. A scan module as defined in claim 9 or 10 wherein the hanging bracket (34, 36) is supported from the frame by a flexure member (38).

12. A scan module as defined in claim 11 wherein the flexure member (38) comprises a polyester material film.

13. A scan module as defined in claim 1 wherein the scanning component (12) is supported from the frame (10) by a flexure member (38), the scanning component (12) further including counterweight means (30, 32) balancing the mass of the optical element (180) at the flexure member (38).

14. A scan module as defined in claim 13 further including an electromagnetic coil (172) mounted to the frame (10), the counterweight means (30, 32) at least partially overlying the coil (172).

15. A scan module as defined in claim 1 wherein the scanning component (12) is supported from the frame (10) by a flexure member (38), and the optical element (180) is supported from the scanning component by a further flexure member (178), the flexure member (38) and the further flexure member (178) being arranged to flex in mutually perpendicular directions.

16. A scan module as defined in claim 1 including first and second anti-shock members (56, 58), the first anti-shock member (56) being adjacent a first side of the frame, and the second anti-shock member (58) being adjacent a second side of the frame.

17. A scan module as defined in claim 1 wherein the anti-shock member (56, 58) has a longitudinal axis, the movement of the scanning component at the aperture (68), during oscillation, being substantially parallel to said longitudinal axis.

18. A scan module as defined in claim 1 wherein the anti-shock member (56, 58) comprises a pin.

19. A method of assembling a scan module for use in a scanner for reading indicia having parts of differing reflectivity, the scan module comprising: a frame (10); a scanning component (12) to be mounted to the frame for oscillatory motion, the scanning component including an optical element (180) for directing light in a scanning pattern across an indicia to be read, the scanning component having an aperture (68) therein; and an anti-shock pin (56, 58) having a first head portion (60), a second head portion (64) and a waist portion (62) having a smaller cross section than the first and second head portions; the method comprising:
a) positioning the scanning component (12) adjacent to the frame (10);
b) partially inserting the pin (56, 58) into the frame so that the second head portion (64) passes through the aperture (68) and extends from the aperture in to a correspondingly-shaped bore (70) in the frame, thereby aligning the scanning component with respect to the frame;
c) securing the scanning component (12) to the frame (10);
d) continuing insertion of the pin (56, 58) into the frame so that the waist portion (62) of the pin becomes located within the aperture (68), thereby providing clearance for the scanning component to oscillate in use, but preventing excessive movement of the scanning component with respect to the frame in the event that the module is subjected to a mechanical shock.

20. A method as defined in claim 19 wherein the first head portion (60) of the pin is threaded, and is received within a corresponding threaded bore (66) within the frame.

21. A method as defined in claim 20 wherein the final location of the pin (56, 58), for normal operation of the scan module, is defined by a position in which the first head portion (60) of the pin lies flush with the frame.

22. A scan module as defined in any of claims 1 et 18, for use in a scanner for reading indicia having parts of differing light reflectivity,
wherein said scanning component (12) comprises a main bracket (26) mounted to the frame by flexible support means (38) for oscillatory motion, the main bracket (26) carrying said optical element for directing light in a scanning pattern across an indicia to be read, the main the bracket (26) having said aperture (68) therein;
the scan module further comprising :
d) an electromagnetic coil (172) mounted to the frame;
e) magnet means (174) secured to the main bracket (26) adjacent the coil (172);
and
f) the main bracket (26) further including a counterweight portion (30, 32) balancing the mass of the optical element (180) at the flexible support means (38), the counterweight portion (30, 32) at least partially overlying the coil (172).

23. A scan module as defined in claim 22 wherein the frame (10) comprises a first side portion (18), a second side portion (20), and a rear portion (16) connecting the first and second side portions, the electromagnetic coil (172) being mounted between the side portions (18, 20).

24. A scan module as defined in claim 23 including an optical collector element (184) mounted to the first side portion (18).

25. A scan module as defined in claim 23 including a photodetector unit (186) mounted to the second side portion(20).

26. A scan module as defined in claim 23 wherein the first and second side portions (18, 20) have respective cut out portions (54), within which are received respective hanging brackets (34, 36) of the main bracket (26).

27. A scan module as defined in claim 26 wherein the hanging brackets (34, 36) are mounted to the frame by respective flexure members (38).

28. A scan module as defined in claim 27 wherein the flexure members (38) are polyester material films.

## Patentansprüche

1. Ein Abtastmodul zur Verwendung in einer Abtastvorrichtung zum Lesen von Indizien oder Anzeigemitteln mit Teilen unterschiedlicher Lichtreflektivität, wobei das Abtastmodul Folgendes aufweist:
a) einen Rahmen (10);
b) eine Abtastkomponente (12) angebracht am Rahmen für eine Schwingungs- oder Oszillationsbewegung, wobei die Abtastkomponente ein optisches Element (180) aufweist, um Licht in einem Abtastmuster über zu lesende Anzeigemittel zu tasten, wobei die Abtastkomponente eine Öffnung oder Apertur (68) darinnen aufweist; und
c) ein Antistoßglied (56, 58) **dadurch gekennzeichnet, dass** das Antistoßglied durch die Öffnung in der Abtastkomponente verläuft und kleiner ist im Querschnitt als die Größe der Öffnung, wodurch ein Zwischenraum vorgesehen wird für die Abtastkomponente, um im Gebrauch zu schwingen, wobei aber eine übermäßige Bewegung der Abtastkomponente bezüglich des Rahmens im Falle, dass das Modul einem mechanischen Stoß ausgesetzt wird, verhindert wird.

2. Abtastmodul nach Anspruch 1, wobei das Antistoßglied (56, 58) ein Stift ist, der einen ersten Kopfteil (60), einen zweiten Kopfteil (64) und einen Taillenteil (62) aufweist, der einen kleineren Querschnitt besitzt als die ersten und zweiten Kopfteile, wobei der Taillenteil innerhalb der Öffnung (68) während des Normalbetriebs des Abtastmoduls angeordnet ist.

3. Abtastmodul nach Anspruch 2, wobei der erste Kopfteil (60) ein externes Schraubengewinde aufweist, welches derart angeordnet ist, dass es in eine Bohrung (66) im Rahmen eingeschraubt werden kann.

4. Abtastmodul nach Anspruch 2, wobei der zweite Kopfteil (64) derart angeordnet ist, dass er innerhalb einer entsprechend bemessenen Bohrung (70) innerhalb des Rahmens aufgenommen wird.

5. Abtastmodul nach Anspruch 2, wobei die Querschnittsgröße und -form des zweiten Kopfteils (64) der Größe und Form der Öffnung (68) entsprechen.

6. Abtastmodul nach Anspruch 5, wobei der zweite Kopfteil (64) eine derartige Länge besitzt, dass der Stift im zweiten Kopfteil enthalten innerhalb der Öffnung angeordnet werden kann und sich von der Öffnung in eine entsprechend bemessene Bohrung innerhalb des Rahmens erstreckt, wodurch die Abtastkomponente bezüglich des Rahmens angeordnet ist.

7. Abtastmodul nach Anspruch 3, wobei der erste Kopfteil (60) im Wesentlichen fluchtend mit dem Rahmen ist, wenn der Stift sich in der Position für den Normalbetrieb des Abtastmoduls befindet.

8. Abtastmodul nach Anspruch 2, wobei der Stift (56, 58) sich über einen Ausschnittteil (54) des Rahmens erstreckt, wobei die Öffnung (68) sich in einem Teil der Abtastkomponente befindet, die sich in den erwähnten Ausschnittteil erstreckt.

9. Abtastmodul nach Anspruch 8, wobei der erwähnte Teil der Abtastkomponente einen Hängebügel (34, 36) aufweist.

10. Abtastmodul nach Anspruch 1, wobei die Öffnung (68) sich in einem Teil der Abtastkomponente befindet, die einen Hängebügel (34, 36) aufweist.

11. Abtastmodul nach Anspruch 9 oder 10, wobei der Hängebügel (34, 36) von dem Rahmen durch ein biegsames bzw. Biegeglied (38) getragen ist.

12. Abtastmodul nach Anspruch 11, wobei das biegsame Glied (38) eine . Polyestermaterialfolie bzw. einen -film aufweist.

13. Abtastmodul nach Anspruch 1, wobei die Abtastkomponente (12) von dem Rahmen (10) durch ein biegsames Glied (38) getragen wird, wobei ferner die Abtastkomponente (12) Gegengewichtmittel (30, 32) aufweist, die die Masse des optischen Elementes (180) an einem biegsamen Glied (38) ausgleichen.

14. Abtastmodul nach Anspruch 13, wobei ferner eine elektromagnetische Spule (172) am Rahmen (10) angebracht ist, und wobei die Gegengewichtmittel (30, 32) mindestens teilweise die Spule (172) überlappen oder darüber liegen.

15. Abtastmodul nach Anspruch 1, wobei die Abtastkomponente von dem Rahmen (10) durch ein biegsames Glied (38) getragen ist, und wobei das optische Element (180) von der Abtastkomponente durch ein weiteres biegsames Glied (178) getragen wird, und wobei das biegsame Glied (38) und das weitere biegsame Glied (178) derart angeordnet sind, dass sie in gegenseitig senkrechten Richtungen sich biegen.

16. Abtastmodul nach Anspruch 1, wobei erste und zweite Antistoßglieder (56, 58) vorgesehen sind, wobei das erste Antistoßglied (56) benachbart zu einer erste Seite des Rahmens vorgesehen ist, und wobei das zweite Antistoßglied (58) benachbart zu einer zweiten Seite des Rahmens vorgesehen ist.

17. Abtastmodul nach Anspruch 1, wobei das Antistoßglied (56, 58) eine Längsachse besitzt, und wobei die Bewegung der Abtastkomponente an der Öffnung (68) während der Schwingung im Wesentlichen parallel zu der erwähnten Längsachse verläuft.

18. Abtastmodul nach Anspruch 1, wobei das Antistoßglied (56, 58) einen Stift aufweist.

19. Verfahren zum Zusammenbau eines Abtastmoduls zur Verwendung in einer Abtastvorrichtung zum Lesen von Anzeigemitteln mit Teilen von unterschiedlicher Reflektivität, wobei das Abtastmodul Folgendes aufweist: einen Rahmen (10);
eine Abtastkomponente (12) zum Anordnen am Rahmen zur Schwingungsbewegung, wobei die Abtastkomponente ein optisches Element (180) aufweist, um Licht in einem Abtastmuster über ein Anzeigemittel, welches gelesen werden soll, zu leiten, und wobei die Abtastkomponente ferner eine Öffnung (68) darinnen aufweist; und
wobei ein Antistoßstift (56, 58) einen ersten Kopfteil (60), einen zweiten Kopfteil (64) und einen Taillenteil (62) aufweist mit einem kleineren Querschnitt als die ersten und zweiten Kopfteile, wobei das Verfahren ferner Folgendes vorsieht:
a) Positionieren der Abtastkomponente (12) benachbart zu dem Rahmen (10);
b) teilweises Einsetzen des Stiftes (56, 58) in den Rahmen, so dass der zweite Kopfteil (64) durch die Öffnung (68) verläuft und sich von der Öffnung in eine entsprechend geformte Bohrung (70) im Rahmen erstreckt, wodurch die Abtastkomponente bezüglich des Rahmens ausgerichtet wird;
c) Befestigen der Abtastkomponente (12) am Rahmen (10);
d) Fortsetzen des Einsetzens des Stiftes (56, 58) in den Rahmen derart, dass der Taillenteil (62) des Stiftes innerhalb der Öffnung (68) angeordnet wird, wodurch ein Zwischenrahmen vorgesehen wird für die Abtastkomponente, um im Gebrauch zu schwingen, wobei aber verhindert wird, dass eine übermäßige Bewegung der Abtastkomponente bezüglich des Rahmens erfolgt, und zwar im Falle, dass das Modul einem mechanischen Stoß ausgesetzt wird.

20. Verfahren nach Anspruch 19, wobei der ersten Kopfteil (60) des Stiftes mit Gewinde versehen ist und aufgenommen wird innerhalb einer entsprechenden Gewindebohrung (66) innerhalb des Rahmens.

21. Verfahren nach Anspruch 20, wobei die endgültige Stelle des Stiftes (56, 58) für den normalen Betrieb des Abtastmoduls durch eine Position definiert wird, in der der erste Kopfteil (60) des Stiftes mit dem Rahmen fluchtend ist.

22. Abtastmodul nach Anspruch 1 bis 18 zur Verwendung in einer Abtastvorrichtung zum Lesen von Anzeigemitteln mit Teilen von unterschiedlicher Lichtreflektivität, wobei die Abtastkomponente (12) einen Hauptbügel (26) aufweist, und zwar angebracht an dem Rahmen durch flexible Tragmittel (38) zur Schwingbewegung, wobei der Hauptbügel (26) das optische Element trägt, und zwar zum Leiten von Licht in einem Abtastmuster über Anzeigemittel, die gelesen werden sollen, und
wobei ferner der Hauptbügel (26) die erwähnte Öffnung (68) darinnen aufweist;
wobei das Abtastmodul ferner Folgendes aufweist:
d) eine elektromagnetische Spule (172) angebracht am Rahmen; und
e) Magnetmittel (174) befestigt am Hauptbügel (26) benachbart zur Spule (172); und
f) wobei der Hauptbügel (26) ferner einen Gegengewichtsteil (30, 32) aufweist zum Ausgleichen der Masse des optischen Elementes (180) an den flexiblen Tragmitteln (38), wobei der Gegengewichtsteil (30, 32) mindestens teilweise über der Spule (172) liegt.

23. Abtastmodul nach Anspruch 22, wobei der Rahmen (10) einen ersten Seitenteil (18), einen zweiten Seitenteil (20) und einen Rückenteil (16) aufweist, der die ersten und zweiten Seitenteile verbindet, und wobei die elektromagnetische Spule (172) zwischen den Seitenteilen (18, 20) angeordnet ist.

24. Abtastmodul nach Anspruch 23, wobei ein optisches Kollektorelement (184) an dem ersten Seitenteil (18) angebracht ist.

25. Abtastmodul nach Anspruch 23 mit einer Photodetektoreinheit (186) angebracht an dem zweiten Seitenteil (20).

26. Abtastmodul nach Anspruch 23, wobei die ersten und zweiten Seitenteile (18, 20) jeweils entsprechende Ausschnittteile (54) aufweisen, innerhalb derer die entsprechenden Hängebügel (34, 36) des Hauptbügels (26) aufgenommen werden.

27. Abtastmodul nach Anspruch 26, wobei die Hängebügel (34, 36) am Rahmen durch entsprechende Biegeglieder (38) angebracht sind.

28. Abtastmodul nach Anspruch 27, wobei die biegsamen Glieder (38) Polyestermaterialfolien oder -filme sind.

## Revendications

1. Module de balayage destiné à être utilisé dans un analyseur pour lire des repères comportant des portions ayant des propriétés de réflexion lumineuse différentes, le module de balayage comprenant :
a) un châssis (10) ;
b) un composant de balayage (12) monté sur le châssis pour permettre un mouvement oscillant, le composant de balayage comprenant un élément optique (180) pour diriger de la lumière selon un motif de balayage en travers d'un repère à lire, le composant de balayage comprenant une ouverture (68) ; et
c) un élément anti-choc (56, 58),
**caractérisé en ce que** l'élément anti-choc passe à travers l'ouverture dans le composant de balayage, l'élément anti-choc ayant une plus petite section que l'ouverture, laissant ainsi un jeu pour que le composant de balayage oscille en utilisation, mais empêchant un déplacement excessif du composant de balayage par rapport au châssis dans le cas où le module est soumis à un choc mécanique.

2. Module de balayage selon la revendication 1, dans lequel l'élément anti-choc (56, 58) est une tige ayant une première partie de tête (60), une seconde partie de tête (64) et une partie centrale (62) de section plus petite que les première et seconde parties de tête, la partie centrale étant disposée dans l'ouverture (68) lors du fonctionnement normal du module de balayage.

3. Module de balayage selon la revendication 2, dans lequel la première partie de tête (60) porte un filetage externe qui est disposé pour être vissé dans un alésage (66) dans le châssis.

4. Module de balayage selon la revendication 2, dans lequel la seconde partie de tête (64) est disposée pour être reçue dans un alésage (70) de dimension correspondante dans le châssis.

5. Module de balayage selon la revendication 2, dans lequel la dimension et la forme en coupe de la seconde partie de tête (64) correspondent à la dimension et à la forme de l'ouverture (68).

6. Module de balayage selon la revendication 5, dans lequel la seconde partie de tête (64) a une longueur telle que .la tige peut être positionnée de sorte que la seconde partie de tête est contenue dans l'ouverture et s'étend à partir de l'ouverture dans un alésage de dimension correspondante dans le châssis, localisant ainsi le composant de balayage par rapport au châssis.

7. Module de balayage selon la revendication 3, dans lequel la première partie de tête (60) est sensiblement en alignement avec le châssis quand la tige est dans une position de fonctionnement normal du module de balayage.

8. Module de balayage selon la revendication 2, dans lequel la tige (56, 58) s'étend en travers d'une partie découpée (54) du châssis, l'ouverture (68) se trouvant dans une partie du composant de balayage qui s'étend dans la partie découpée.

9. Module de balayage selon la revendication 8, dans lequel la partie du composant de balayage comprend un crochet de suspension (34, 36).

10. Module de balayage selon la revendication 1, dans lequel l'ouverture (68) se trouve dans une partie du composant de balayage comprenant un crochet de suspension (34, 36).

11. Module de balayage selon la revendication 9 ou 10, dans lequel le crochet de suspension (34, 36) est porté à partir du châssis par un élément flexible (38).

12. Module de balayage selon la revendication 11, dans lequel l'élément flexible (38) comprend un film de polyester.

13. Module de balayage selon la revendication 1,dans lequel le composant de balayage (12) est porté à partir du châssis (10) par un élément flexible (38), le composant de balayage (12) comprenant en outre un moyen de contre-poids (30, 32) équilibrant la masse de l'élément optique (180) au niveau de l'élément flexible (38).

14. Module de balayage selon la revendication 13, comprenant en outre une bobine électromagnétique (172) montée sur le châssis (10), le moyen de contre-poids (30, 32) recouvrant au moins partiellement la bobine (172).

15. Module de balayage selon la revendication 1, dans lequel le composant de balayage (12) est porté à partir du châssis (10) par un élément flexible (38) et l'élément optique (180) est porté à partir du composant de balayage par un autre élément flexible (178), l'élément flexible (38) et l'autre élément flexible (178) étant disposés pour fléchir dans des directions mutuellement perpendiculaires.

16. Module de balayage selon la revendication 1, comprenant des premier et second éléments anti-choc (56, 58), le premier élément anti-choc (56) étant voisin d'un premier côté du châssis et le second élément anti-choc (58) étant voisin d'un second côté du châssis.

17. Module de balayage selon la revendication 1, dans lequel l'élément anti-choc (56, 58) a un axe longitudinal, le déplacement du composant de balayage au niveau de l'ouverture (68), pendant l'oscillation, étant sensiblement parallèle audit axe longitudinal.

18. Module de balayage selon la revendication 1, dans lequel l'élément anti-choc (56, 58) comprend une tige.

19. Procédé d'assemblage d'un module de balayage destiné à être utilisé dans un analyseur pour lire des repères comportant des parties de pouvoirs réflecteurs distincts, le module de balayage comprenant un châssis (10), un module de balayage (12) à monter sur le châssis pour un mouvement d'oscillation, le composant de balayage comprenant un élément optique (180) pour diriger de la lumière selon un motif de balayage en travers d'un repère à lire, le composant de balayage comportant une ouverture (68) ; et une tige anti-choc (56, 58) ayant une première partie de tête (60), une seconde partie de tête (64) et une partie centrale (62) de plus petite section que les première et seconde parties de tête, le procédé comprenant les étapes suivantes :
a) positionner le composant de balayage (12) au voisinage du châssis (10) ;
b) insérer partiellement la tige (56, 58) dans le châssis de sorte que la seconde partie de tête (64) passe par l'ouverture (68) et s'étend à partir de l'ouverture dans un alésage de forme correspondante (70) dans le châssis, alignant ainsi le composant de balayage avec le châssis ;
c) fixer le composant de balayage (12) au châssis (10) ; et
d) continuer l'insertion de la tige (56, 58) dans le châssis de sorte que la partie centrale (62) de la tige soit située dans l'ouverture (68), fournissant ainsi un jeu pour le composant de balayage pour qu'il puisse osciller en utilisation, mais empêchant un déplacement excessif du composant de balayage par rapport au châssis dans le cas où le module est soumis à un choc mécanique.

20. Procédé selon la revendication 19, dans lequel la première partie de tête (60) de la tige est pilotée et est reçue dans un alésage taraudé correspondant (66) dans le châssis.

21. Procédé selon la revendication 20, dans lequel l'emplacement final de la tige (56, 58) pour un fonctionnement normal du module de balayage est défini par une position dans laquelle la première partie de tête (60) de la tige se trouve en alignement avec la tige.

22. Module de balayage selon l'une quelconque des revendications 1 à 18, destiné à être utilisé dans un analyseur pour lire des repères comportant des parties de pouvoirs réflecteurs distincts, dans lequel le composant de balayage (12) comprend un crochet principal (26) monté à partir du châssis par un moyen support flexible (38) pour permettre un mouvement oscillatoire, le crochet principal (26) portant un élément optique pour diriger de la lumière selon un motif de balayage en travers d'un repère à lire, le crochet principal (26) comportant l'ouverture (68) ; le module de balayage comprenant en outre :
d) une bobine électromagnétique (172) montée sur le châssis ;
e) un moyen d'aimant (174) fixé au crochet principal (26) au voisinage de la bobine (72) ; et
f) le crochet principal (26) comprenant en outre une partie de contre-poids (30, 32) équilibrant la masse de l'élément optique (180) au niveau du moyen support flexible (38), la partie de contre-poids (30, 32) recouvrant au moins partiellement la bobine (172).

23. Module de balayage selon la revendication 22, dans lequel le châssis (10) comprend une première partie latérale (18), une seconde partie latérale (20) et une partie arrière (16) reliant les première et seconde parties latérales, la bobine électromagnétique (172) étant montée entre les parties latérales (18, 20).

24. Module de balayage selon la revendication 23, comprenant un élément collecteur optique (184) monté sur la première partie latérale (18).

25. Module de balayage selon la revendication 23, comprenant un module photodétecteur (186) monté sur la seconde partie latérale (20).

26. Module de balayage selon la revendication 23, dans lequel les première et seconde parties latérales (18, 20) comportent des parties découpées respectives (54) dans lesquelles sont reçues des crochets de suspension respectifs (34, 36) du crochet principal (26).

27. Module de balayage selon la revendication 26, dans lequel les crochets de suspension (34, 36) sont montés sur le châssis par des éléments flexibles respectifs (38).

28. Module de balayage selon la revendication 27, dans lequel les éléments flexibles (38) sont des films de polyester.
